# EUROPÄISCHE PATENTSCHRIFT

(11) **EP 3 536 393 B1**
(45) Veröffentlichungstag und Bekanntmachung des Hinweises auf die Patenterteilung: **21.06.2023**
(21) Anmeldenummer: 19155498.9
(22) Anmeldetag: 05.02.2019
(51) Int. Cl.: B01F 23/213, B01F 25/00, B01F 25/10, B01F 25/313, F01N 3/20, F01N 3/28

(54) **VORRICHTUNG ZUM MISCHEN VON ABGAS UND EINEM ADDITIV**
DEVICE FOR MIXING EXHAUST GAS AND AN ADDITIVE
DISPOSITIF DE MÉLANGE DE GAZ D'ÉCHAPPEMENT ET D'UN ADDITIF

(30) Priorität: 15.02.2018 DE 102018103368
(43) Veröffentlichungstag der Anmeldung: 11.09.2019
(73) Patentinhaber: MAN Truck & Bus SE, 80995 München (DE)
(72) Erfinder: Preissler, Martin, 80638 München (DE); Griesbeck, Roland, 90469 Nürnberg (DE); Aupperle, Tim, 90461 Nürnberg (DE); Albert, Herbert, 91056 Erlangen (DE)
(74) Vertreter: v. Bezold & Partner Patentanwälte - PartG mbB

(56) Entgegenhaltungen:
- EP-A1- 2 204 556
- EP-A1- 2 518 287
- EP-A1- 3 279 440
- WO-A1-2005/073524
- WO-A1-2012/052690
- DE-A1-102016 004 333
- DE-T5-112013 000 014
- DE-U1-202015 102 092
- US-A1- 2010 186 393
- US-A1- 2014 230 418
- US-A1- 2015 308 316

## Beschreibung

Die Erfindung betrifft eine Vorrichtung zum Mischen eines Abgasstroms mit einem Additiv, insbesondere einem Reduktionsmittel, in einem Abgasstrang einer Brennkraftmaschine insbesondere eines Kraftfahrzeugs.

Vorrichtungen zum Mischen eines Abgasstroms mit einem Additiv werden insbesondere in Verbindung mit sogenannten SCR-Katalysatoren verwendet. Als Additiv kann ein Reduktionsmittel, zum Beispiel eine wässrige Harnstofflösung, stromaufwärts von der Mischvorrichtung oder in die Mischvorrichtung eingespritzt werden. Das Reduktionsmittel kann sich mit dem Abgas vermischen. Unter Zuhilfenahme des SCR-Katalysators können somit auf eine bekannte Weise Stickoxide im Abgas reduziert werden.

Die DE 10 2012 008 556 A1 offenbart eine Vorrichtung zur Abgasnachbehandlung eines Abgasmassenstroms in einem Abgasstrang, wobei in dem Abgasstrang ein Injektor zum Zuführen von Reduktionsmittel in den Abgasmassenstrom angeordnet ist, und wobei ein zylinderförmiges Abgasstrangsegment einen tangentialen Einlass aufweist. Stromabwärts des tangentialen Einlasses ist ein Mischer zur Umkehrung der Drehrichtung des Abgasmassenstroms angeordnet. Stromaufwärts des Mischers ist der Injektor in dem zylinderförmigen Abgasstrangsegment auf der Mittelachse des Mischers oder stromaufwärts des Einlasses in einem querschnittsverengten Bereich eines Abgasstrangsegment angeordnet.

Die EP 3 067 529 A1 offenbart eine Vorrichtung zur Nachbehandlung von Abgas einer Verbrennungskraftmaschine durch Mischung des Abgases mit einem zudosierten zumindest teilweise flüssigen Additiv, Verdampfung des flüssigen Anteils des Additives und Aufbereitung des Abgas-Additiv-Gemischs für einen nachgeordneten Katalysator. Die Vorrichtung umfasst eine Vorkammer, eine Hauptkammer, eine Mischeinrichtung, in der das Abgas mit einem Additiv vermischbar ist, und eine Zwischeneinrichtung, über die ein Abgas-Teilstrom aus der Vorkammer der Mischeinrichtung stirnseitig zuführbar ist. Die Zwischeneinrichtung ist mit Drallelementen versehen.

Die DE 20 2015 102092 U1 offenbart eine Vorrichtung entsprechend dem Oberbegriff des Anspruchs 1. Sie offenbart eine Abgasreinigungsbaugruppe. In einer stromaufwärtigen Leitung ist ein erstes Abgasreinigungsorgan angeordnet ist. In einer stromabwärtige Leitung ist ein zweites Abgasreinigungsorgan angeordnet. Die stromaufwärtige Leitung und die stromabwärtige Leitung sind parallel zueinander angeordnet. Ein Volumen ist zur stromaufwärtigen und zur stromabwärtigen Leitung durch eine Wand begrenzt, die einen mit der stromaufwärtigen Leitung verbundenen Abgaseinlass und einen mit der stromabwärtigen Leitung verbundenen Abgasauslass aufweist. Das Volumen begrenzt einen Durchlassweg, der die Abgase in einer Hauptströmungsrichtung von dem Einlass zum Auslass leitet. Das Volumen weist zwischen dem Einlass und dem Auslass ein Leitblech auf, das dazu ausgebildet ist, die Abgase von der Wand wegzuleiten.

Weitere Mischvorrichtungen sind bspw. aus der WO 2009/024815 A2 und der EP 2 985 434 A1 bekannt.

Der Erfindung liegt die Aufgabe zu Grunde, eine alternative und/oder verbesserte Vorrichtung zum Mischen eines Abgasstroms mit einem Additiv zu schaffen. Insbesondere soll ein Bauraum optimal genutzt und/oder eine Anordnung der Komponenten der Vorrichtung besser aufeinander abgestimmt sein.

Die Aufgabe wird gelöst durch eine Vorrichtung gemäß dem unabhängigen Anspruch. Vorteilhafte Weiterbildungen sind in den abhängigen Ansprüchen und der Beschreibung angegeben.

Die Vorrichtung ist zum Mischen eines Abgasstroms mit einem Additiv, insbesondere einem Reduktionsmittel (z.B. Flüssigkeit oder Flüssigkeit-Gas-Gemisch, insbesondere eine wässrige Harnstofflösung) geeignet. Die Vorrichtung weist ein (beispielsweise zylindrisches) Mischrohr zum Mischen des Abgasstroms mit dem Additiv auf. Die Vorrichtung weist ein erstes Umlenkrohr zum Umlenken des Abgasstroms, insbesondere um 180°, auf. Der Abgasstrom ist über das erste Umlenkrohr dem Mischrohr stirnseitig zuführbar. Das erste Umlenkrohr weist einen Befestigungsbereich zum Anbringen eines Additivinjektors an dem ersten Umlenkrohr auf. Das erste Umlenkrohr weist einen drallerzeugenden Wandbereich auf, der stirnseitig zum Mischrohr angeordnet und zum Aufprägen eines Dralls auf den Abgasstrom ausgebildet ist.

Die Vorrichtung ermöglicht eine bauraumgünstige Anordnung, da das erste Umlenkrohr sowohl zur stirnseitigen Drallerzeugung als auch zur Anbringung des Additivinjektors genutzt wird. Die Formgebung des ersten Umlenkrohrs kann hierbei eine Doppelfunktion erfüllen. Einerseits kann durch die Formgebung des ersten Umlenkrohrs, insbesondere einer Umlenkhaube des ersten Umlenkrohrs, ein Drall erzeugt sowie ein Abgasstrom geführt und andererseits Platz für die Anordnung des Additivinjektors geschaffen werden. D.h., die Funktionen Drallerzeugung und Additivinjektorbefestigung können bauteileinheitlich in dem ersten Umlenkrohr, insbesondere der Umlenkhaube des ersten Umlenkrohrs, realisiert sein.

Insbesondere kann die Vorrichtung zur Integration in ein Abgasnachbehandlungssystem einer Brennkraftmaschine eines Kraftfahrzeugs, insbesondere eines Nutzfahrzeugs, geeignet sein.

In einem besonders bevorzugten Ausführungsbeispiel weist das erste Umlenkrohr eine Umlenkhaube auf. Der drallerzeugende Wandbereich und/oder der Befestigungsbereich sind an der Umlenkhaube vorgesehen. Damit kann die oben angesprochene Doppelfunktion in der Umlenkhaube integriert werden, die genügend Platz für den drallerzeugende Wandbereich und dem Befestigungsbereich für den Additivinjektor bietet.

Insbesondere kann die Umlenkhaube zusammen mit einem Rohrkörperabschnitt, an dem die Umlenkhaube befestigt ist, das erste Umlenkrohr bilden.

Erfindungsgemäss ist der drallerzeugende Wandbereich als eine wendelförmige (helixabschnittförmige) Rampe ausgebildet. Die wendelförmige Rampe ermöglicht eine Drallerzeugung im Abgasstrom stirnseitig zu dem Mischrohr. Der Befestigungsabschnitt und damit der Additivinjektor können in einem Innenbereich bzw. auf einer Innenseite der wendelförmigen Rampe auf einer Außenseite des ersten Umlenkrohrs, insbesondere der Umlenkhaube des ersten Umlenkrohrs, angeordnet sein.

In einem Ausführungsbeispiel ist der drallerzeugende Wandbereich dazu ausgebildet, auf einer Innensete des ersten Umlenkrohrs einen Drall zu erzeugen und auf einer Außenseite des ersten Umlenkrohrs Raum zur Anordnung des Befestigungsbereichs und/oder des Additivinjektors bereitzustellen. Alternativ oder ergänzend ist der Befestigungsbereich und/oder der Additivinjektor stirnseitig zum Mischrohr neben dem drallerzeugenden Wandbereich angeordnet. Erfindungsgemäss ist der Befestigungsbereich und/oder der Additivinjektor zentrisch zu einer Wendelmittelachse, um die sich der drallerzeugende Wandbereich wendelförmig erstreckt, angeordnet. Zusätzlich ist der Befestigungsbereich und/oder der Additivinjektor so angeordnet, dass ein Additiv aus dem Additivinjektor in ein Drallauge des mit dem Drall beaufschlagten Abgasstroms einspritzbar ist.

In einem weiteren Ausführungsbeispiel verläuft eine Wendelmittelachse, um die sich der drallerzeugende Wandabschnitt wendelförmig erstreckt, beabstandet, insbesondere parallel, zu einer Mittellängsachse des Mischrohrs.

In einer Ausführungsform weist die Vorrichtung ferner den Additivinjektor, insbesondere Reduktionsmittelinjektor, auf. Der Additivinjektor ist so an dem Befestigungsbereich angebracht, dass Additiv von dem Additivinjektor dem Mischrohr stirnseitig zuführbar ist und/oder der Additivinjektor exzentrisch zu einer Mittellängsachse des Mischrohrs angeordnet ist. Dies ermöglicht, dass das Additiv exzentrisch zu der Mittellängsachse und somit vorzugsweise zentrisch zu der Wendelmittelachse (und damit zentrisch zum Drallauge) in den Abgasstrom eingespritzt wird.

In einer weiteren Ausführungsform weist das Mischrohr ein, insbesondere zylindrisches (z.B. kreiszylindrisch oder in Form eines elliptischen Zylinders), Innenrohr, und ein, insbesondere zylindrisches (z.B. kreiszylindrisch oder in Form eines elliptischen Zylinders), Außenrohr, das das Innenrohr (z.B. koaxial) umgibt, auf. Beispielsweise kann ein Ringspalt zwischen den Innenrohr und dem Außenrohr ringförmig, z.B. in Form eines Kreisrings oder eines elliptischen Rings, sein. Vorzugsweise kann der Abgasstrom über das erste Umlenkrohr in einem ersten Abgasteilstrom dem Innenrohr und in einem zweiten Abgasteilstrom einem Bereich zwischen dem Innenrohr und dem Außenrohr stirnseitig zuführbar sein. Damit kann ermöglicht werden, dass sich im Innenrohr der erste Abgasteilstrom mit dem Additiv vermischt, während der zweite Abgasteilstrom das Innenrohr erwärmt. Die Erwärmung erhöht die Verdampfung von auf die Innenumfangsfläche des Innenrohrs aufgetroffenen flüssigen Additivtröpfchen, sodass deren Ablagerung verringert wird.

In einer bevorzugten Ausführungsform ist der erste Abgasteilstrom größer als der zweite Abgasteilstrom. Alternativ oder zusätzlich weist der erste Abgasteilstrom einen Volumenanteil zwischen 70 % und 90 %, insbesondere 80 %, des Abgasstroms durch das erste Umlenkrohr auf. Alternativ oder zusätzlich weist der zweite Abgasteilstrom einen Volumenanteil zwischen 10 % und 30 %, insbesondere 20 %, des Abgasstroms durch das erste Umlenkrohr auf. Alternativ oder zusätzlich ist ein Spalt zwischen dem Innenrohr und dem Außenrohr zwischen 5 mm und 10 mm, insbesondere 8 mm.

In einer bevorzugten Ausführungsvariante ist das Innenrohr wärmeleitend zur Übertragung von Wärmenergie von dem zweiten Abgasteilstrom zu einer Innenumfangsfläche des Innenrohrs ausgebildet. Damit kann der zweite Abgasteilstrom das Innenrohr zum Verhindern und/oder Reduzieren einer Kondensation des Additivs an einer Innenumfangsfläche des Innenrohrs wärmen. Beispielsweise kann das Innenrohr aus einem wärmeleitenden Metall oder einer wärmeleitenden Metalllegierung hergestellt sein.

In einer Ausführungsvariante ist eine Außenmantelfläche des Innenrohrs profiliert, insbesondere zum Erhöhen einer Wärmeübertragung zwischen dem Bereich (zwischen dem Innenrohr und dem Außenrohr) und dem Innenrohr.

In einer weiteren Ausführungsvariante folgt eine Kontur einer Stirnfläche des Innenrohrs, die dem ersten Umlenkrohr (insbesondere der Umlenkhaube des ersten Umlenkrohrs) zugewandt ist, zumindest abschnittsweise einer Innenkontur des drallerzeugenden Wandbereichs (z.B. der wendelförmigen Rampe) in einem im Wesentlichen gleichbleibenden Abstand. Es ist auch möglich, dass zumindest abschnittsweise unterschiedliche Abstände zur Innenkontur des drallerzeugenden Wandbereichs vorhanden sind, um die Strömung zu optimieren. Alternativ oder zusätzlich ist eine Stirnfläche des Innenrohrs, die dem ersten Umlenkrohr (insbesondere der Umlenkhaube des ersten Umlenkrohrs) zugewandt ist, zumindest abschnittsweise wendelförmig ausgebildet. Damit kann eine homogene Einströmung in das Innenrohr erreicht werden.

Vorzugsweise kann eine Auslasskontur (z.B. eine Stirnfläche) des Innenrohrs profiliert sein, insbesondere mit einem Kronenprofil, einem Zackenprofil und/oder einem Wellenprofil. Zum Beispiel können die Profile radial schräg nach außen, radial schräg nach innen oder abwechselnd radial schräg nach außen und radial schräg nach innen vorgesehen sein.

Es ist auch möglich, dass ein Auslassbereich des Innenrohrs haubenförmig ausgebildet ist. Zum Beispiel kann sich die Haubenform teilweise in das zweite Umlenkrohr hineinerstrecken und/oder eine Strömungsumlenkung um beispielsweise 90° bewirken.

Es wird explizit darauf hingewiesen, dass hierin die Ausbildung der Auslasskontur bzw. des Auslassbereichs des Innenrohrs des Mischrohrs unabhängig von sämtlichen anderen Merkmalen, die hierin beschrieben sind, offenbart ist.

Insbesondere kann eine Steigung der Wendelform der Stirnfläche im Wesentlichen einer Steigung der Wendelform des drallerzeugenden Wandabschnitts entsprechen.

In einem Ausführungsbeispiel weist die Vorrichtung einen Einspritzschutz auf, der zumindest teilweise um eine (Additiv-) Einspritzöffnung des Additivinjektors und/oder des ersten Umlenkrohrs (zum Beispiel der Umlenkhaube) herum angeordnet ist. Damit kann eine negative Beeinflussung der Einspritzung des Additivs durch den drallförmigen Abgasstrom verhindert oder verringert werden.

In einem weiteren Ausführungsbeispiel weist die Vorrichtung ein zweites Umlenkrohr zum Umlenken des Abgasstroms, insbesondere um 180°, auf. Das zweite Umlenkrohr ist stromabwärts von dem Mischrohr angeordnet.

Insbesondere kann das erste Umlenkrohr direkt stromaufwärts von dem Mischrohr und/oder das zweite Umlenkrohr direkt stromabwärts von dem Mischrohr angeordnet sein. Alternativ oder zusätzlich kann das erste Umlenkrohr an dem Mischrohr befestigt sein und/oder das Mischrohr an dem zweiten Umlenkrohr befestigt sein.

Vorzugsweise kann das zweite Umlenkrohr ebenfalls aus einer Umlenkhaube und einem Rohrkörperabschnitt gebildet sein.

In einer Ausführungsvariante ist eine Einlassöffnung des ersten Umlenkrohrs einer Auslassöffnung des zweiten Umlenkrohrs zugewandt. Alternativ oder zusätzlich ist eine Einlassöffnung des ersten Umlenkrohrs in einer Umfangsrichtung um eine Mittellängsachse des Mischrohrs, insbesondere zwischen 90° und 270°, versetzt zu einer Auslassöffnung des zweiten Umlenkrohrs. Alternativ oder zusätzlich überlappt eine Einlassöffnung des ersten Umlenkrohrs eine Auslassöffnung des zweiten Umlenkrohrs, in einer Richtung einer Mittellängsachse des Mischrohrs betrachtet, nicht. Damit kann eine platzsparende Anordnung und Kombination mit weiteren Komponenten des Abgasstrangs ermöglicht werden.

Vorzugsweise kann die Vorrichtung stromabwärts von einem Oxidationskatalysator und/oder einem Partikelfilter, und/oder stromaufwärts von einem SCR-Katalysator angeordnet sein.

Bevorzugt kann der Oxidationskatalysator und/oder der Partikelfilter direkt stromaufwärts von der Vorrichtung angeordnet sein und in die Einlassöffnung des ersten Umlenkrohrs münden. Insbesondere kann eine Längsachse des Oxidationskatalysators und/oder des Partikelfilters im Wesentlichen parallel zu der Mittellängsachse des Mischrohrs verlaufen.

Es ist auch möglich, dass der SCR-Katalysator direkt stromabwärts von der Vorrichtung angeordnet ist und die Auslassöffnung des zweiten Umlenkrohrs in den SCR-Katalysator mündet. Insbesondere kann eine Längsachse des SCR-Katalysators im Wesentlichen parallel zu der Mittellängsachse des Mischrohrs verlaufen.

In einer weiteren Ausführungsvariante ist das erste Umlenkrohr und/oder das zweite Umlenkrohr doppelwandig mit einer integrierten Wärmeisolierung ausgebildet. Die Wärmeisolierung ermöglicht, dass eine ungewünschte Abkühlung des Abgasstroms in der Vorrichtung verhindert oder zumindest verringert wird.

Insbesondere kann die Umlenkhaube des ersten Umlenkrohrs und/oder die Umlenkhaube des zweiten Umlenkrohrs doppelwandig mit der integrierten Wärmeisolierung ausgebildet sein.

Die vorliegende Offenbarung ist auch auf ein Kraftfahrzeug, insbesondere ein Nutzfahrzeug, mit einer Vorrichtung wie hierin offenbart gerichtet.

Es ist auch möglich, die Vorrichtung wie hierin offenbart für Personenkraftwagen, Großmotoren, geländegängige Fahrzeuge, stationäre Motoren, Marinemotoren usw. zu verwenden.

Gemäß einem weiteren Aspekt ist die vorliegende Offenbarung auf eine Umlenkhaube für eine Vorrichtung zum Mischen eines Abgasstroms mit einem Additiv gerichtet. Die Umlenkhaube ist zum Umlenken des Abgasstroms, insbesondere um 180°, ausgebildet. Über die Umlenkhaube ist der Abgasstrom einem Mischrohr stirnseitig zuführbar. Die Umlenkhaube weist einen Befestigungsbereich zum Anbringen eines Additivinjektors an der Umlenkhaube auf. Die Umlenkhaube weist einen drallerzeugenden Wandbereich auf, der stirnseitig zum Mischrohr anordenbar und zum Aufprägen eines Dralls auf den Abgasstrom ausgebildet ist.

Insbesondere kann die Umlenkhaube wie die hierin offenbarte Umlenkhaube des ersten Umlenkrohrs ausgebildet sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht einer Mischvorrichtung gemäß einem Ausführungsbeispiel;
- Figur 2: eine Draufsicht auf die beispielhafte Mischvorrichtung;
- Figur 3: eine Seitenansicht der beispielhaften Mischvorrichtung;
- Figur 4: eine weitere Seitenansicht der beispielhaften Mischvorrichtung;
- Figur 5: eine Schnittansicht der beispielhaften Mischvorrichtung entlang der Linie A-A in Figur 4;
- Figur 6: eine Schnittansicht durch eine Umlenkhaube der beispielhaften Mischvorrichtung;
- Figur 7: eine Schnittansicht durch eine weitere Umlenkhaube der beispielhaften Mischvorrichtung;
- Figur 8: eine perspektivische Ansicht eines Einspritzschutzes der beispielhaften Mischvorrichtung; und
- Figur 9: eine perspektivische Ansicht einer Umlenkhaube und eines Innenrohrs der beispielhaften Mischvorrichtung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

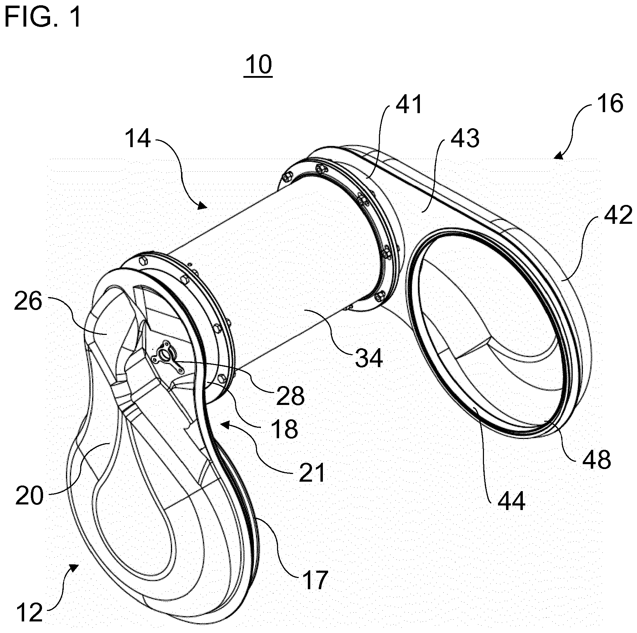

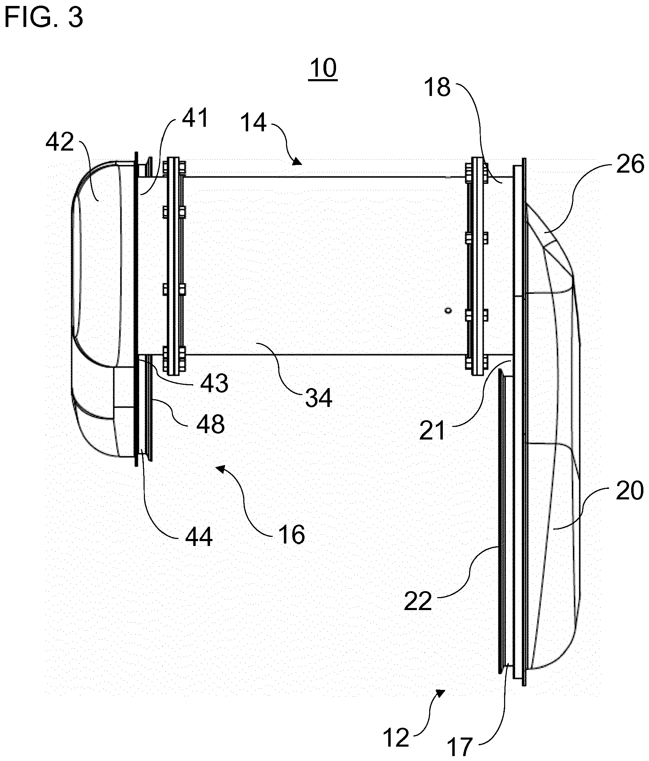

In den Figuren 1 bis 5 ist eine Mischvorrichtung 10 gezeigt. Die Mischvorrichtung 10 kann insbesondere zum Mischen von Abgas mit einem Additiv in einem Abgassystem einer Brennkraftmaschine verwendet werden. Vorzugsweise ist die Brennkraftmaschine in einem Nutzfahrzeug, zum Beispiel einem Omnibus oder einem Lastkraftwagen, umfasst. Bevorzugt dient die Mischvorrichtung 10 zum Einspritzen eines Reduktionsmittels, zum Beispiel einer wässrigen Harnstofflösung, und zum Mischen des Reduktionsmittels mit Abgas für einen stromabwärts angeordneten SCR-Katalysator (Katalysator zur selektiven katalytischen Reduktion) zur Reduktion von Stickoxiden.

Die Mischvorrichtung 10 weist ein erstes Umlenkrohr 12, ein Mischrohr 14 und ein zweites Umlenkrohr 16 auf. Das erste Umlenkrohr 12 ist stromaufwärts von dem Mischrohr 14 angeordnet. Das Mischrohr 14 ist zwischen dem ersten Umlenkrohr 12 und dem zweiten Umlenkrohr 16 angeordnet. Das zweite Umlenkrohr 16 ist stromabwärts des Mischrohrs 14 angeordnet.

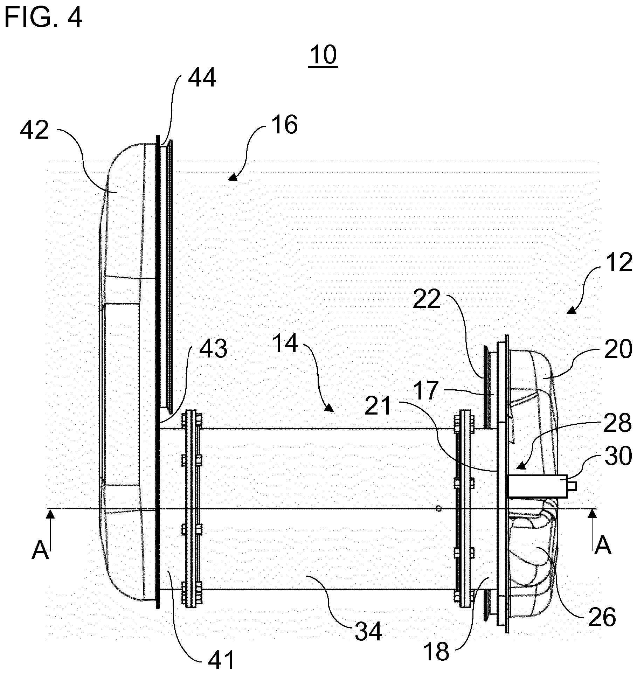

Das erste Umlenkrohr 12 weist einen einlassseitigen Rohrkörperabschnitt 17, einen auslassseitigen Rohrkörperabschnitt 18, eine Umlenkhaube 20 und einen Rohrboden 21 auf. Das erste Umlenkrohr 12 weist ferner eine Einlassöffnung 22 im einlassseitigen Rohrkörperabschnitt 17, eine Auslassöffnung 24 im auslassseitigen Rohrkörperabschnitt 18, einen drallerzeugenden Wandbereich 26 und einen Befestigungsbereich 28 für einen Additivinjektor 30 (nur in Figur 4 schematisch dargestellt) auf.

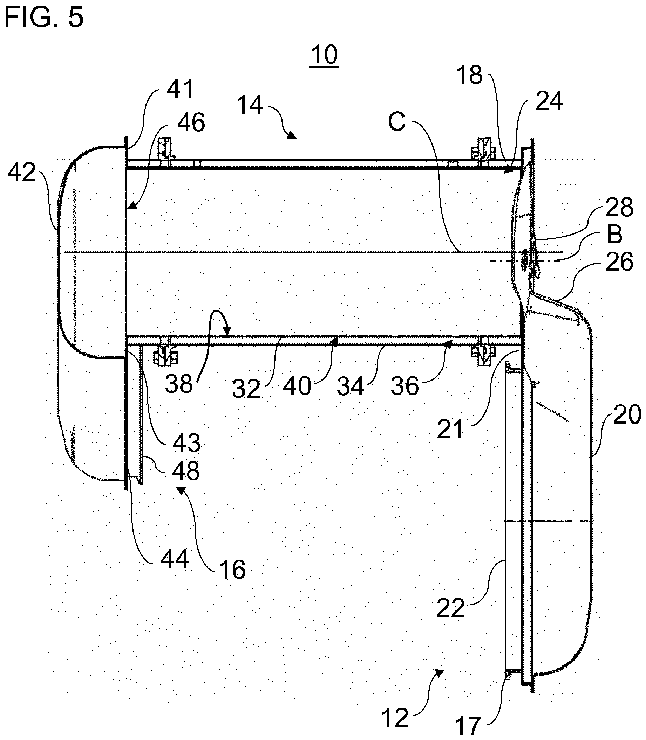

Die Rohrkörperabschnitte 17, 18, die Umlenkhaube 20 und der Rohrboden 21 sind zum Bilden des ersten Umlenkrohrs 12, insbesondere gasdicht, aneinander befestigt. Das erste Umlenkrohr 12 erstreckt sich zwischen der Einlassöffnung 22 und der Auslassöffnung 24 (siehe Figur 5). Der auslassseitige Rohrkörperabschnitt 18 ist an dem Mischrohr 14 befestigt, z. B. über eine Flanschverbindung, wie dargestellt ist. Die Auslassöffnung 24 mündet in das Mischrohr 14. Über die Auslassöffnung 24 führt das erste Umlenkrohr 12 dem Mischrohr 14 einen Abgasstrom stirnseitig zu.

Das erste Umlenkrohr 12 kann beispielsweise stromabwärts eines Oxidationskatalysators, zum Beispiel eines Dieseloxidationskatalysators (engl. DOC), und/oder eines Partikelfilters, zum Beispiel eines Dieselpartikelfilters (engl. DPF), angeordnet sein.

Das erste Umlenkrohr 12, insbesondere die Umlenkhaube 20 des ersten Umlenkrohrs 12, lenkt einen Abgasstrom um 180° um. Eine Richtung einer Einlassströmung in das erste Umlenkrohr 12 hinein (durch die Einlassöffnung 22) ist parallel und entgegengesetzt zu einer Richtung einer Auslassströmung aus dem Umlenkrohr 12 in das Mischrohr 14 (durch die Auslassöffnung 24).

Der drallerzeugende Wandbereich 26 ist stirnseitig zu dem Mischrohr 14 angeordnet. Der drallerzeugende Wandbereich 26 ist als wendelförmige (helixabschnittförmige) Rampe ausgebildet. Der drallerzeugende Wandbereich 26 erstreckt sich wendelförmig um eine Wendelmittelachse B (siehe Figur 5). Die Wendelmittelachse B ist parallel und versetzt zu einer Mittellängsachse C (siehe Figur 5) des Mischrohrs 14. Der drallerzeugende Wandabschnitt 26 bewirkt, dass einem Abgasstrom, der durch das erste Umlenkrohr 12 strömt, ein Drall aufgeprägt wird. Der Drall entspricht einer spiralförmigen Strömung um die Wendelmittelachse B. Der Abgasstrom strömt mit einem Drall aus dem ersten Umlenkrohr 12 aus und in das Mischrohr 14 ein.

Der Befestigungsbereich 28 ist zum Befestigen des Additivinjektors 30 (siehe Figur 4) ausgebildet. Der Befestigungsbereich 28 kann beispielsweise, wie dargestellt, als ein Dreibein vorgesehen sein. Der Befestigungsbereich 28 ist exzentrisch zu der Mittellängsachse C des Mischrohrs 14 angeordnet. Insbesondere ist der Befestigungsbereich 28 so angeordnet, dass der Additivinjektor 30 (siehe Figur 4) das Additiv in ein Drallauge der mit dem Drall beaufschlagten Abgasströmung einspritzt. Dies ermöglicht eine homogene Vermischung zwischen dem Abgas und dem Additiv. Der Befestigungsbereich 28 ist dazu erfindungsgemäss zentrisch zu der Wendelmittelachse B angeordnet.

Der Additivinjektor 30 ist insbesondere als ein Reduktionsmittelinjektor ausgebildet. Mittels des Additivinjektors 30 kann ein Additiv in das Mischrohr 14, insbesondere nur in ein Innenrohr des Mischrohrs 14, eingespritzt werden. Beispielsweise kann der Additivinjektor 30 eine wässrige Harnstofflösung zum Reduzieren von Stickoxiden mithilfe eines der Mischvorrichtung 10 nachgeschalteten SCR-Katalysators einspritzen.

Das Mischrohr 14 weist ein Innenrohr 32 und ein Außenrohr 34 auf. Mit anderen Worten gesagt, das Mischrohr 14 ist doppelwandig ausgebildet. Das Innenrohr 32 und das Außenrohr 34 können bspw. konzentrisch zur Mittelängsachse C angeordnet sein. Das Innenrohr 32 kann im Wesentlichen zylinderförmig, z.B. kreiszylinderförmig oder elliptisch, sein. Das Außenrohr 34 kann im Wesentlichen zylinderförmig, z.B. kreiszylinderförmig oder elliptisch, sein. Zwischen dem Innenrohr 32 und dem Außenrohr 34 können beispielsweise Abstandhalter vorgesehen sein.

Der Abgasstrom von dem ersten Umlenkrohr 12 wird dem Mischrohr 14 zugeführt. Im Einzelnen wird der Abgasstrom in das Innenrohr 32 des Mischrohrs 14 und einen (Ring-) Bereich 36 zwischen dem Innenrohr 32 und dem Außenrohr 34 zugeführt (siehe bspw. Figur 5).

Der dem Innenrohr 32 zugeführte erste Abgasteilstrom vermischt sich in dem Innenrohr 32 mit dem Additiv, das von dem Additivinjektor 30 eingespritzt wird. Die Drallbeaufschlagung des Abgasstroms unterstützt die Vermischung zwischen Abgas und Additiv.

Der dem Bereich 36 zwischen dem Innenrohr 32 und dem Außenrohr 34 zugeführte Abgasteilstrom dient zum Erwärmen und Warmhalten des Innenrohrs 32. Dadurch verdampfen flüssige Additivtröpfchen an der Innenumfangsfläche des Innenrohrs 32 besser. Die Bildung von Ablagerungen wird wirksam verhindert oder reduziert.

Um einen Wärmeübergang zwischen dem im Bereich 36 strömenden zweiten Abgasteilstrom und der Innenumfangsfläche 38 des Innenrohrs 32 zu erhöhen, kann das Innenrohr 32 wärmeleitend ausgebildet sein. Zum Beispiel kann das Innenrohr 32 aus einem wärmeleitenden Material, zum Beispiel einem Metall oder einer Metalllegierung, hergestellt sein. Es ist auch möglich, dass eine Außenmantelfläche 40 des Innenrohrs 32 zum Vergrößern eines Flächeninhalts einer Oberfläche der Außenmantelfläche 40 profiliert ist (nicht dargestellt). Auch hiermit kann eine Wärmeübertragung vergrößert werden.

Der erste Abgasteilstrom, der durch das Innenrohr 32 strömt, ist größer als der zweite Abgasteilstrom, der durch den Bereich 36 strömt. Untersuchungen legen nahe, dass besonders bevorzugte Verhältnisse zwischen dem ersten Abgasteilstrom und dem zweiten Abgasteilstrom existieren. Diese bevorzugten Verhältnisse ermöglichen einerseits eine gute Vermischung zwischen Additiv und Abgas im Innenrohr 32 und damit eine effiziente Stickoxidreduktion. Andererseits ermöglichen diese bevorzugten Verhältnisse eine ausreichende Erwärmung des Innenrohrs 32 zum Reduzieren oder Verringern einer Kondensation des Additivs an der Innenumfangsfläche 38 des Innenrohrs 32.

Insbesondere weist der erste Abgasteilstrom durch das Innenrohr 32 einen Volumenanteil zwischen 70 % und 90 %, insbesondere 80 %, des Abgasstroms durch das erste Umlenkrohr 12 auf. Der zweite Abgasteilstrom durch den Bereich 36 kann einen Volumenanteil zwischen 10 % und 30 %, insbesondere 20 %, des Abgasstroms durch das erste Umlenkrohr aufweisen. Ein Spalt zwischen dem Innenrohr 32 und dem Außenrohr 34 kann zwischen 5 mm und 10 mm, insbesondere 8 mm, sein.

Der Abgasstrom verlässt das Mischrohr 14 und strömt in das zweite Umlenkrohr 16 ein. Im Einzelnen verlässt der mit dem Additiv vermischte erste Abgasteilstrom das Innenrohr 32 des Mischrohrs 14 und strömt in das zweite Umlenkrohr 16 ein. Zusätzlich verlässt der zweite Abgasteilstrom den Bereich 36 zwischen dem Innenrohrs 32 und dem Außenrohr 34 und strömt in das zweite Umlenkrohr 16 ein.

Das zweite Umlenkrohr 16 weist einen einlassseitigen Rohrkörperabschnitt 41, eine Umlenkhaube 42, einen Rohrboden 43 und einen auslassseitigen Rohrkörperabschnitt 44 auf.

Die Rohrkörperabschnitte 41, 44, die Umlenkhaube 42 und der Rohrboden 43 sind zum Bilden des zweiten Umlenkrohrs 16, insbesondere gasdicht, aneinander befestigt. Das zweite Umlenkrohr 12 erstreckt sich zwischen einer Einlassöffnung 46 (siehe Figur 5) und einer Auslassöffnung 48. Der Rohrkörperabschnitt 41 ist an dem Mischrohr 14 befestigt, z. B. über eine Flanschverbindung, wie dargestellt ist. Über die Einlassöffnung 46 führt das Mischrohr 14 stirnseitig den Abgasstrom (den ersten Abgasteilstrom und den zweiten Abgasteilstrom) zu dem zweiten Umlenkrohr 16 zu.

Das zweite Umlenkrohr 16 kann beispielsweise stromaufwärts eines SCR-Katalysators angeordnet sein.

Das zweite Umlenkrohr 16, insbesondere die Umlenkhaube 42 des zweiten Umlenkrohrs 16, lenkt einen Abgasstrom um 180° um. Eine Richtung einer Einlassströmung in das zweite Umlenkrohr 16 hinein (durch die Einlassöffnung 46) ist parallel und entgegengesetzt zu einer Richtung einer Auslassströmung aus dem zweiten Umlenkrohr 16 (durch die Auslassöffnung 48).

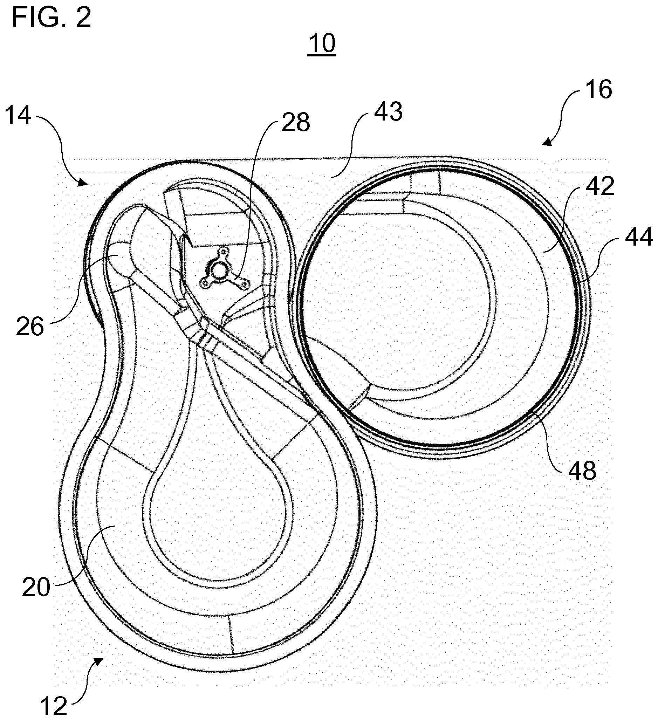

Um eine platzsparende Anordnung der Mischvorrichtung 10 sowie der stromaufwärts angeordneten Abgasnachbehandlungkomponenten und der stromabwärts angeordneten Abgasnachbehandlungkomponenten zu ermöglichen, ist die Einlassöffnung 22 des ersten Umlenkrohrs 12 der Auslassöffnung 48 des zweiten Umlenkrohrs 16 zugewandt. Im Einzelnen ist die Einlassöffnung 22 des ersten Umlenkrohrs 12 in einer Umfangsrichtung um die Mittellängsachse C des Mischrohrs 14 um bspw. 90° versetzt zu der Auslassöffnung 48 des zweiten Umlenkrohrs 16. Damit überlappen sich die Einlassöffnung 22 des ersten Umlenkrohrs 12 und die Auslassöffnung 48 des zweiten Umlenkrohrs 16, in einer Richtung der Mittellängsachse C des Mischrohrs 14 betrachtet, nicht (siehe Figur 2).

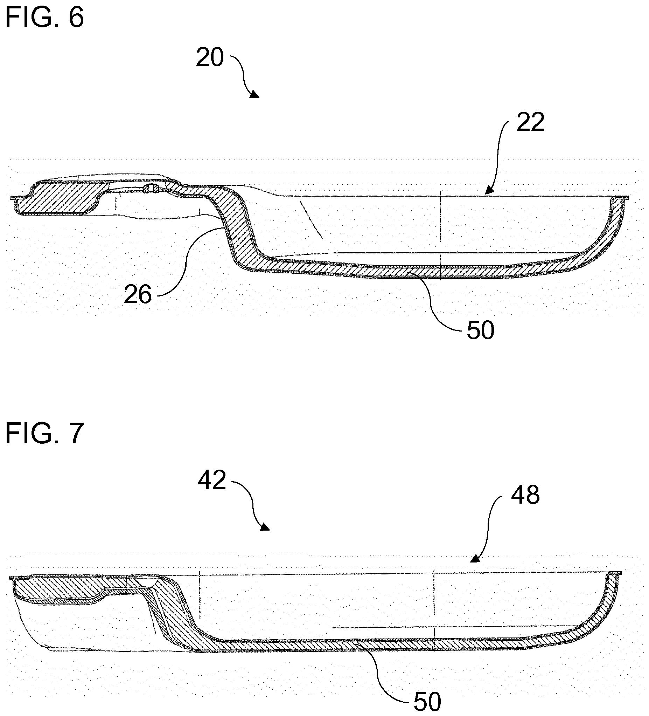

In den Figuren 6 und 7 sind bevorzugte Ausführungsformen für die Umlenkhauben 20 und 42 dargestellt.

Die Umlenkhauben 20, 42 sind doppelwandig ausgebildet. Zwischen den Wänden der Umlenkhauben 20, 42 ist eine Wärmeisolierung 50 eingebracht. Die Wärmeisolierung 50 kann beispielsweise eine oder mehrere Glasfasermatten aufweisen. Die Wärmeisolierung 50 kann eine ungewünschte Abkühlung des Abgasstroms verringern. Die jeweiligen Innen- und Außenwände der Umlenkhaube 20, 42 können beispielsweise kraftschlüssig, formschlüssig und/oder stoffschlüssig miteinander verbunden sein. Zum Beispiel können die jeweiligen Wände miteinander verschweißt sein.

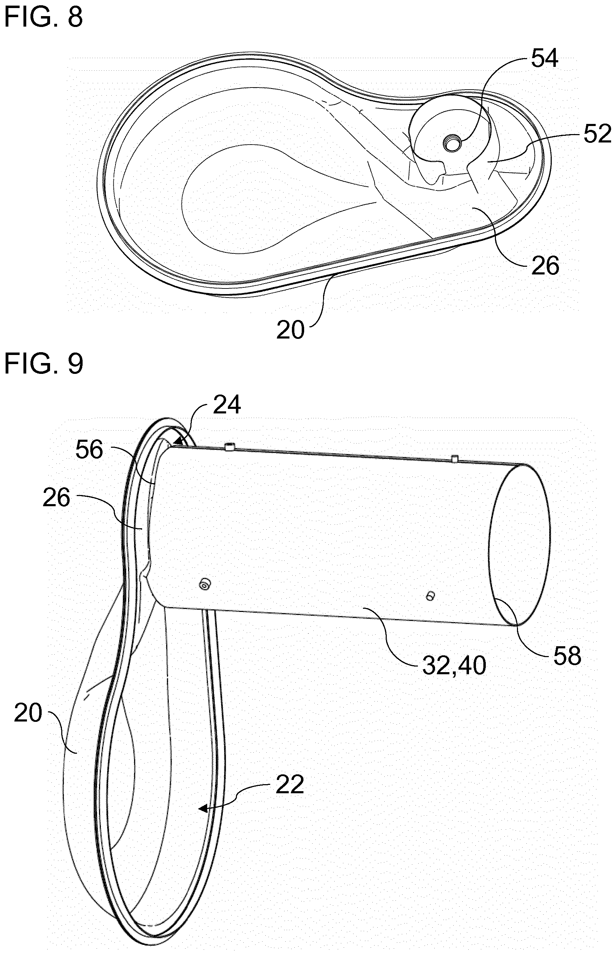

In Figur 8 ist ein optionaler Einspritzschutz 52 für den Additivinjektor 30 dargestellt.

Der Einspritzschutz 52 kann an der Umlenkhaube 20 des ersten Umlenkrohrs 12 angeformt oder befestigt sein. Der Einspritzschutz 52 umgibt eine Einspritzöffnung 54 für den Additivinjektor 30 (siehe Figur 4) und somit eine Einspritzöffnung (nicht dargestellt) des Additivinjektors 30 teilweise. Der Einspritzschutz 52 verhindert oder reduziert einen Einfluss des Abgasstroms auf die Einspritzung des Additivs durch den Additivinjektor 30. Der Einspritzschutz 52 kann beispielsweise abschnittsweise rohrförmig und/oder abschnittsweise kreiszylinderförmig ausgebildet sein.

In Figur 9 ist eine bevorzugte Ausführungsform des Innenrohrs 32 des Mischrohrs 14 dargestellt.

Eine Stirnfläche 56 des Innenrohrs 32, die dem ersten Umlenkrohr 12 zugewandt ist, ist wendelförmig ausgebildet. Damit kann gewährleistet werden, dass ein Abstand zu einer Innenkontur der Umlenkhaube 20 des ersten Umlenkrohrs 12 und insbesondere dem wendelförmigen, drallerzeugenden Wandabschnitt 26 gehalten wird. Dies ermöglicht eine homogene Einströmung in das Innenrohr 32.

Eine Stirnfläche 58 des Innenrohrs 32, die dem zweiten Umlenkrohr 16 zugewandt ist, kann zur Strömungsoptierung ausgebildet sein. In einem nicht dargestellten Beispiel kann die Stirnfläche 58 beispielsweise profiliert sein, zum Beispiel in einem Kronenprofil, Zackenprofil, Wellenprofil oder dergleichen. Die Profile können beispielsweise radial schräg nach außen, radial schräg nach innen oder abwechselnd radial schräg nach außen und radial schräg nach innen vorgesehen sein. Es ist auch möglich, den Auslassbereich des Innenrohrs 32 haubenförmig auszubilden, z. B. mit einer Haube, die sich teilweise in das zweite Umlenkrohr hineinstreckt und/oder eine Strömungsumlenkung um beispielsweise 90° bewirkt (nicht dargestellt).

### Bezugszeichenliste

- 10: Mischvorrichtung
- 12: Erstes Umlenkrohr
- 14: Mischrohr
- 16: Zweites Umlenkrohr
- 17: Einlassseitiger Rohrkörperabschnitt
- 18: Auslassseitiger Rohrkörperabschnitt
- 20: Umlenkhaube
- 21: Rohrboden
- 22: Einlassöffnung
- 24: Auslassöffnung
- 26: Drallerzeugender Wandbereich
- 28: Befestigungsbereich
- 30: Additivinjektor
- 32: Innenrohr
- 34: Außenrohr
- 36: Bereich zwischen Innenrohr und Außenrohr
- 38: Innenumfangsfläche
- 40: Außenmantelfläche
- 41: Einlassseitiger Rohrkörperabschnitt
- 42: Umlenkhaube
- 43: Rohrboden
- 44: Auslassseitiger Rohrkörperabschnitt
- 46: Einlassöffnung
- 48: Auslassöffnung
- 50: Wärmeisolierung
- 52: Einspritzschutz
- 54: Einspritzöffnung
- 56: Stirnfläche
- 58: Stirnfläche

- B: Wendelmittelachse
- C: Mittellängsachse

## Patentansprüche

1. Vorrichtung (10) zum Mischen eines Abgasstroms mit einem Additiv, insbesondere einem Reduktionsmittel, aufweisend:
ein Mischrohr (14) zum Mischen des Abgasstroms mit dem Additiv; und
ein erstes Umlenkrohr (12) zum Umlenken des Abgasstroms, insbesondere um 180°, wobei
der Abgasstrom über das erste Umlenkrohr (12) dem Mischrohr (14) stirnseitig zuführbar ist;
das erste Umlenkrohr (12) einen Befestigungsbereich (28) zum Anbringen eines Additivinjektors (30) an dem ersten Umlenkrohr (12) aufweist;
das erste Umlenkrohr (12) einen drallerzeugenden Wandbereich (26) aufweist, der stirnseitig zum Mischrohr (14) angeordnet und zum Aufprägen eines Dralls auf den Abgasstrom ausgebildet ist,
der drallerzeugende Wandbereich (26) als eine wendelförmige Rampe ausgebildet ist, **dadurch gekennzeichnet, dass**
der Befestigungsbereich (28) und/oder der Additivinjektor (30) zentrisch zu einer Wendelmittelachse, um die sich der drallerzeugende Wandbereich (46) wendelförmig erstreckt, angeordnet ist.

2. Vorrichtung (10) nach Anspruch 1, wobei:
das erste Umlenkrohr (12) eine Umlenkhaube (20) aufweist, und
der drallerzeugende Wandbereich (26) und/oder der Befestigungsbereich (28) an der Umlenkhaube (20) vorgesehen sind.

3. Vorrichtung (10) nach einem der vorherigen Ansprüche, wobei:
der drallerzeugende Wandbereich (26) dazu ausgebildet ist, auf einer Innenseite des ersten Umlenkrohrs (12) einen Drall zu erzeugen und auf einer Außenseite des ersten Umlenkrohrs (12) Raum zur Anordnung des Befestigungsbereichs (28) und/oder des Additivinjektors (30) bereitzustellen; und/oder
der Befestigungsbereich (28) und/oder der Additivinjektor (30) stirnseitig zum Mischrohr (14) neben dem drallerzeugenden Wandbereich (26) angeordnet ist; und/oder
der Befestigungsbereich (28) und/oder der Additivinjektor (30) so angeordnet ist, dass ein Additiv aus dem Additivinjektor (30) in ein Drallauge des mit dem Drall beaufschlagten Abgasstroms einspritzbar ist.

4. Vorrichtung (10) nach einem der vorherigen Ansprüche, wobei:
eine Wendelmittelachse (B), um die sich der drallerzeugende Wandabschnitt (26) wendelförmig erstreckt, beabstandet, insbesondere parallel, zu einer Mittellängsachse (C) des Mischrohrs (14) verläuft.

5. Vorrichtung (10) nach einem der vorherigen Ansprüche, ferner aufweisend:
den Additivinjektor (30), insbesondere Reduktionsmittelinjektor, der an dem Befestigungsbereich (28) so angebracht ist, dass Additiv von dem Additivinjektor (30) dem Mischrohr (14) stirnseitig zuführbar ist und/oder der Additivinjektor (30) exzentrisch zu einer Mittellängsachse (C) des Mischrohrs (14) angeordnet ist.

6. Vorrichtung (10) nach einem der vorherigen Ansprüche, wobei:
das Mischrohr (14) ein, insbesondere zylindrisches, Innenrohr (32), und ein, insbesondere zylindrisches, Außenrohr (34), das das Innenrohr umgibt, aufweist; und
der Abgasstrom über das erste Umlenkrohr (12) in einem ersten Abgasteilstrom dem Innenrohr (32) und in einem zweiten Abgasteilstrom einem Bereich (36) zwischen dem Innenrohr (32) und dem Außenrohr (34) stirnseitig zuführbar ist.

7. Vorrichtung (10) nach Anspruch 6, wobei:
der erste Abgasteilstrom größer als der zweite Abgasteilstrom ist; und/oder
der erste Abgasteilstrom einen Volumenanteil zwischen 70 % und 90 %, insbesondere 80 %, des Abgasstroms durch das erste Umlenkrohr (12) aufweist; und/oder
der zweite Abgasteilstrom einen Volumenanteil zwischen 10 % und 30 %, insbesondere 20 %, des Abgasstroms durch das erste Umlenkrohr (12) aufweist; und/oder
ein Spalt zwischen dem Innenrohr (32) und dem Außenrohr (34) zwischen 5 mm und 10 mm, insbesondere 8 mm, ist.

8. Vorrichtung (10) nach Anspruch 6 oder Anspruch 7, wobei:
das Innenrohr (32) wärmeleitend zur Übertragung von Wärmenergie von dem zweiten Abgasteilstrom zu einer Innenumfangsfläche (38) des Innenrohrs (32) ausgebildet ist; und/oder
der zweite Abgasteilstrom das Innenrohr (32) zum Verhindern und/oder Reduzieren einer Kondensation des Additivs an einer Innenumfangsfläche (38) des Innenrohrs (32) wärmt.

9. Vorrichtung (10) nach einem der Ansprüche 6 bis 8, wobei:
eine Außenmantelfläche (40) des Innenrohrs (32) profiliert ist, insbesondere zum Erhöhen einer Wärmeübertragung zwischen dem Bereich (36) und dem Innenrohr (32).

10. Vorrichtung (10) nach einem der vorherigen Ansprüche, wobei:
eine Kontur einer Stirnfläche (56) des Innenrohrs (32), die dem ersten Umlenkrohr (12) zugewandt ist, zumindest abschnittsweise einer Innenkontur des drallerzeugenden Wandbereichs (26) in einem im Wesentlichen gleichbleibenden Abstand folgt und/oder zumindest abschnittsweise unterschiedliche Abstände zur Innenkontur des drallerzeugenden Wandbereichs (26) aufweist, und/oder
eine Stirnfläche (56) des Innenrohrs (32), die dem ersten Umlenkrohr (12) zugewandt ist, zumindest abschnittsweise wendelförmig ausgebildet ist; und/oder
eine Auslasskontur des Innenrohrs (32) profiliert ist, insbesondere mit einem Kronenprofil, einem Zackenprofil und/oder einem Wellenprofil; und/oder
ein Auslassbereich des Innenrohrs (32) haubenförmig ausgebildet ist.

11. Vorrichtung (10) nach einem der vorherigen Ansprüche, ferner aufweisend:
einen Einspritzschutz (52), der zumindest teilweise um eine Einspritzöffnung (54) des Additivinjektors (30) und/oder des ersten Umlenkrohrs (12) herum angeordnet ist.

12. Vorrichtung (10) nach einem der vorherigen Ansprüche, ferner aufweisend:
ein zweites Umlenkrohr (16) zum Umlenken des Abgasstroms, insbesondere um 180°, wobei das zweite Umlenkrohr (16) stromabwärts von dem Mischrohr (14) angeordnet ist, wobei insbesondere:
eine Einlassöffnung (22) des ersten Umlenkrohrs (12) einer Auslassöffnung (48) des zweiten Umlenkrohrs (16) zugewandt ist; und/oder
eine Einlassöffnung (22) des ersten Umlenkrohrs (12) in einer Umfangsrichtung um eine Mittellängsachse (C) des Mischrohrs (14), insbesondere zwischen 90° und 270°, versetzt zu einer Auslassöffnung (48) des zweiten Umlenkrohrs (14) ist; und/oder
eine Einlassöffnung (22) des ersten Umlenkrohrs (12) eine Auslassöffnung (48) des zweiten Umlenkrohrs (16), in einer Richtung einer Mittellängsachse (C) des Mischrohrs (14) betrachtet, nicht überlappt.

13. Vorrichtung (10) nach einem der vorherigen Ansprüche, wobei:
das erste Umlenkrohr (12) und/oder ein zweites Umlenkrohr (12) doppelwandig mit einer integrierten Wärmeisolierung (50) ausgebildet ist.

14. Kraftfahrzeug, insbesondere Nutzfahrzeug, mit einer Vorrichtung (10) nach einem der vorherigen Ansprüche.

## Claims

1. Device (10) for mixing an exhaust gas stream with an additive, in particular a reducing agent, comprising:
a mixing tube (14) for mixing the exhaust gas stream with the additive; and
a first deflection tube (12) for deflecting the exhaust gas stream, in particular by 180°, wherein
the exhaust gas stream can be fed to the mixing tube (14) on an end side via the first deflection tube (12);
the first deflection tube (12) has a fastening portion (28) for attaching an additive injector (30) to the first deflection tube (12);
the first deflection tube (12) has a swirl-generating wall portion (26) arranged at an end side to the mixing tube (14) and configured for imparting a swirl to the exhaust gas flow,
the swirl-generating wall portion (26) is configured as a helical ramp, **characterized in that**
the fastening portion (28) and/or the additive injector (30) is arranged centrally with respect to a helical central axis about which the swirl-generating wall portion (46) extends helically.

2. Device (10) according to claim 1, wherein:
the first deflection tube (12) comprises a deflection hood (20), and
the swirl-generating wall portion (26) and/or the fastening portion (28) are provided on the deflection hood (20).

3. Device (10) according to any one of the preceding claims, wherein:
the swirl-generating wall portion (26) is configured to generate a swirl on an inner side of the first deflection tube (12) and to provide space on an outer side of the first deflection tube (12) for arranging the fastening portion (28) and/or the additive injector (30); and/or
the fastening portion (28) and/or the additive injector (30) is arranged at an end side to the mixing tube (14) adjacent to the swirl-generating wall portion (26); and/or
the fastening portion (28) and/or the additive injector (30) is arranged in such a way that an additive from the additive injector (30) can be injected into a swirl eye of the exhaust gas stream subjected to the swirl.

4. Device (10) according to any one of the preceding claims, wherein:
a helix central axis (B), about which the swirl-generating wall section (26) extends helically, extends at a distance, in particular parallel, to a central longitudinal axis (C) of the mixing tube (14).

5. Device (10) according to any one of the preceding claims, further comprising:
the additive injector (30), in particular reducing agent injector, which is attached to the fastening portion (28) in such a way that additive can be fed from the additive injector (30) to the mixing tube (14) at an end side and/or the additive injector (30) is arranged eccentrically to a central longitudinal axis (C) of the mixing tube (14).

6. Device (10) according to any one of the preceding claims, wherein:
the mixing tube (14) comprises an, in particular cylindrical, inner tube (32), and an, in particular cylindrical, outer tube (34) surrounding the inner tube; and
the exhaust gas flow can be fed via the first deflection tube (12) in a first exhaust gas partial flow to the inner tube (32) and in a second exhaust gas partial flow to a portion (36) between the inner tube (32) and the outer tube (34) on an end side.

7. Device (10) according to claim 6, wherein:
the first exhaust gas partial flow is greater than the second exhaust gas partial flow; and/or
the first exhaust gas partial flow has a volume fraction between 70% and 90%, in particular 80%, of the exhaust gas flow through the first deflection tube (12); and/or
the second exhaust gas partial flow has a volume fraction between 10% and 30%, in particular 20%, of the exhaust gas flow through the first deflection tube (12); and/or
a gap between the inner tube (32) and the outer tube (34) is between 5 mm and 10 mm, in particular 8 mm.

8. Device (10) according to claim 6 or claim 7, wherein:
the inner tube (32) is configured to be thermally conductive for transferring thermal energy from the second exhaust partial flow to an inner circumferential face (38) of the inner tube (32); and/or
the second exhaust partial flow heats the inner tube (32) for preventing and/or reducing condensation of the additive on an inner circumferential face (38) of the inner tube (32).

9. Device (10) according to any one of claims 6 to 8, wherein:
an outer circumferential face (40) of the inner tube (32) is profiled, in particular for increasing a heat transfer between the portion (36) and the inner tube (32).

10. Device (10) according to any of the preceding claims, wherein:
a contour of an end face (56) of the inner tube (32) facing the first deflection tube (12) follows, at least in sections, an inner contour of the swirl-generating wall portion (26) at a substantially constant distance and/or has, at least in sections, different distances from the inner contour of the swirl-generating wall portion (26), and/or
an end face (56) of the inner tube (32) facing the first deflection tube (12) is configured helically at least in sections; and/or
an outlet contour of the inner tube (32) is profiled, in particular with a crown profile, a jagged profile and/or a wave profile; and/or
an outlet portion of the inner tube (32) is configured in a hood shape.

11. Device (10) according to any of the preceding claims, further comprising:
an injection guard (52) arranged at least partially around an injection opening (54) of the additive injector (30) and/or the first deflection tube (12).

12. Device (10) according to any one of the preceding claims, further comprising:
a second deflection tube (16) for deflecting the exhaust gas flow, in particular by 180°, wherein the second deflection tube (16) is arranged downstream of the mixing tube (14), wherein in particular:
an inlet opening (22) of the first deflection tube (12) faces an outlet opening (48) of the second deflection tube (16); and/or
an inlet opening (22) of the first deflection tube (12) is offset from an outlet opening (48) of the second deflection tube (14) in a circumferential direction about a central longitudinal axis (C) of the mixing tube (14), in particular between 90° and 270°; and/or
an inlet opening (22) of the first deflection tube (12) does not overlap an outlet opening (48) of the second deflection tube (16), viewed in a direction of a central longitudinal axis (C) of the mixing tube (14).

13. Device (10) according to any one of the preceding claims, wherein:
the first deflection tube (12) and/or a second deflection tube (12) is configured double-walled with an integrated thermal insulation (50).

14. Motor vehicle, in particular utility vehicle, with a device (10) according to any one of the preceding claims.

## Revendications

1. Dispositif (10) servant au mélange d'un flux de gaz d'échappement avec un additif, en particulier un agent de réduction, présentant :
un tube de mélange (14) servant au mélange du flux de gaz d'échappement avec l'additif ; et
un premier tube de déviation (12) servant à la déviation du flux de gaz d'échappement, en particulier de 180°, dans lequel
le flux de gaz d'échappement peut être acheminé au tube de mélange (14) du côté frontal par le biais du premier tube de déviation (12) ;
le premier tube de déviation (12) présente une région de fixation (28) servant à attacher un injecteur d'additif (30) au premier tube de déviation (12) ;
le premier tube de déviation (12) présente une région de paroi (26) générant de la turbulence, laquelle région est disposée du côté frontal par rapport au tube de mélange (14) et est réalisée pour communiquer une turbulence au flux de gaz d'échappement,
la région de paroi (26) générant de la turbulence est réalisée sous la forme d'une rampe hélicoïdale, **caractérisé en ce que**
la région de fixation (28) et/ou l'injecteur d'additif (30) sont disposés de manière centrée par rapport à un axe médian d'hélice autour duquel la région de paroi (46) générant de la turbulence s'étend de manière hélicoïdale.

2. Dispositif (10) selon la revendication 1, dans lequel :
le premier tube de déviation (12) présente un capot de déviation (20), et
la région de paroi (26) générant de la turbulence et/ou la région de fixation (28) sont prévues sur le capot de déviation (20).

3. Dispositif (10) selon l'une des revendications précédentes, dans lequel :
la région de paroi (26) générant de la turbulence est réalisée pour générer une turbulence sur un côté intérieur du premier tube de déviation (12) et pour fournir, sur un côté extérieur du premier tube de déviation (12), un espace pour disposer la région de fixation (28) et/ou l'injecteur d'additif (30) ; et/ou
la région de fixation (28) et/ou l'injecteur d'additif (30) sont disposés du côté frontal par rapport au tube de mélange (14) à côté de la région de paroi (26) générant de la turbulence ; et/ou
la région de fixation (28) et/ou l'injecteur d'additif (30) sont disposés de telle sorte qu'un additif peut être injecté hors de l'injecteur d'additif (30) dans un œil de turbulence du flux de gaz d'échappement soumis à la turbulence.

4. Dispositif (10) selon l'une des revendications précédentes, dans lequel :
un axe médian d'hélice (B), autour duquel la région de paroi (26) générant de la turbulence s'étend de manière hélicoïdale, s'étend de manière espacée, en particulier parallèlement, par rapport à un axe longitudinal médian (C) du tube de mélange (14).

5. Dispositif (10) selon l'une des revendications précédentes, présentant en outre :
l'injecteur d'additif (30), en particulier l'injecteur d'agent de réduction, qui est attaché à la région de fixation (28) de telle sorte que de l'additif peut être acheminé du côté frontal au tube de mélange (14) à partir de l'injecteur d'additif (30) et/ou que l'injecteur d'additif (30) est disposé de manière excentrique par rapport à un axe longitudinal médian (C) du tube de mélange (14).

6. Dispositif (10) selon l'une des revendications précédentes, dans lequel :
le tube de mélange (14) présente un tube intérieur (32) en particulier cylindrique et un tube extérieur (34) en particulier cylindrique, qui entoure le tube intérieur ; et
le flux de gaz d'échappement peut être acheminé du côté frontal, par le biais du premier tube de déviation (12), au tube intérieur (32) dans un premier flux partiel de gaz d'échappement, et à une région (36) entre le tube intérieur (32) et le tube extérieur (34) dans un deuxième flux partiel de gaz d'échappement.

7. Dispositif (10) selon la revendication 6, dans lequel :
le premier flux partiel de gaz d'échappement est plus grand que le deuxième flux partiel de gaz d'échappement ; et/ou
le premier flux partiel de gaz d'échappement présente une fraction volumique entre 70 % et 90 %, en particulier de 80 %, du flux de gaz d'échappement à travers le premier tube de déviation (12) ; et/ou
le deuxième flux partiel de gaz d'échappement présente une fraction volumique entre 10 % et 30 %, en particulier de 20 %, du flux de gaz d'échappement à travers le premier tube de déviation (12) ; et/ou
un interstice entre le tube intérieur (32) et le tube extérieur (34) est compris entre 5 mm et 10 mm, en particulier est égal à 8 mm.

8. Dispositif (10) selon la revendication 6 ou la revendication 7, dans lequel :
le tube intérieur (32) est réalisé de manière thermoconductrice pour le transfert d'énergie thermique du deuxième flux partiel de gaz d'échappement à une surface périphérique intérieure (38) du tube intérieur (32) ; et/ou
le deuxième flux partiel de gaz d'échappement chauffe le tube intérieur (32) pour empêcher et/ou réduire une condensation de l'additif sur une surface périphérique intérieure (38) du tube intérieur (32).

9. Dispositif (10) selon l'une des revendications 6 à 8, dans lequel :
une surface d'enveloppe extérieure (40) du tube intérieur (32) est profilée, en particulier pour augmenter un transfert thermique entre la région (36) et le tube intérieur (32).

10. Dispositif (10) selon l'une des revendications précédentes, dans lequel :
un contour d'une surface frontale (56) du tube intérieur (32), qui est tournée vers le premier tube de déviation (12), suit au moins dans certaines parties un contour intérieur de la région de paroi (26) générant de la turbulence à une distance sensiblement constante et/ou est situé au moins dans certaines parties à des distances différentes par rapport au contour intérieur de la région de paroi (26) générant de la turbulence, et/ou
une surface frontale (56) du tube intérieur (32), qui est tournée vers le premier tube de déviation (12), est réalisée de manière hélicoïdale au moins dans certaines parties ; et/ou
un contour de sortie du tube intérieur (32) est profilé, en particulier avec un profil en couronne, un profil dentelé et/ou un profil ondulé ; et/ou
une région de sortie du tube intérieur (32) est réalisée en forme de capot.

11. Dispositif (10) selon l'une des revendications précédentes, présentant en outre :
un élément de protection contre l'injection (52), qui est disposé au moins partiellement autour d'une ouverture d'injection (54) de l'injecteur d'additif (30) et/ou du premier tube de déviation (12).

12. Dispositif (10) selon l'une des revendications précédentes, présentant en outre :
un deuxième tube de déviation (16) servant à dévier le flux de gaz d'échappement, en particulier de 180°, dans lequel le deuxième tube de déviation (16) est disposé en aval du tube de mélange (14), dans lequel en particulier
une ouverture d'entrée (22) du premier tube de déviation (12) est tournée vers une ouverture de sortie (48) du deuxième tube de déviation (16) ; et/ou
une ouverture d'entrée (22) du premier tube de déviation (12) est, dans une direction périphérique autour d'un axe longitudinal médian (C) du tube de mélange (14), décalée, en particulier d'entre 90° et 270°, par rapport à une ouverture de sortie (48) du deuxième tube de déviation (14) ; et/ou
une ouverture d'entrée (22) du premier tube de déviation (12) ne chevauche pas une ouverture de sortie (48) du deuxième tube de déviation (16), considérée dans une direction d'un axe longitudinal médian (C) du tube de mélange (14).

13. Dispositif (10) selon l'une des revendications précédentes, dans lequel :
le premier tube de déviation (12) et/ou un deuxième tube de déviation (12) sont réalisés de manière à présenter une double paroi avec une isolation thermique (50) intégrée.

14. Véhicule automobile, en particulier véhicule utilitaire, comprenant un dispositif (10) selon l'une des revendications précédentes.
